# EUROPEAN PATENT APPLICATION

(11) **EP 1 876 148 A1**
(43) Date of publication of application: **09.01.2008**
(21) Application number: 06743437.3
(22) Date of filing: 12.04.2006
(51) Int. Cl.: C02F 11/14, B01D 21/01

(54) **SLIME TREATMENT METHOD**

(30) Priority: 13.04.2005 ES 200500874
(71) Applicant: Lodos Secos S.L., Valdetorres del Jarama, Madrid (ES)
(72) Inventor: SERRANO, Gil Luis, C/Arroyo Salobre, Nave 41-42, Madrid (ES); FOX, Pierre, C/Arroyo Salobre, Nave 41-42, Madrid (ES)
(74) Representative: PROPI, S.L.
(86) International application number: PCT/ES2006/000178
(87) International publication number: WO 2006/108899

(57) **Abstract**

Treatment procedure for sludge generated by the washing of granular materials and use of this procedure as a sludge treatment and management optimisation system. This procedure is carried out by adding a liquid flocculant to primary sludge and decanting it in a decanting tank, obtaining a secondary sludge, adding flocculating liquid to the secondary sludge, flocculating the secondary sludge, decanting and obtaining the tertiary sludge and water.

## Description

### FIELD OF THE INVENTION:

This invention refers to a treatment procedure for sludge generated by the washing of granular mineral materials and to the use of this procedure as a way to optimise the treatment and management of sludge.

### STATE OF THE TECHNOLOGY

Currently the washing process of the raw material for the production of aggregates and metals is associated with the generation of sludge, of a mainly clayey composition, which are stored in ponds built on the land until it loses its water through evaporation, in most cases, and through other mechanical means, acquiring the consistency necessary to recover the land's original use.

The drying time is very long and can be as much as ten years after the moment the sludge is deposited [*"*Paste and thickened tailings - A Guide". Australian Centre for Geomechanics, the University of Western Australia, 2002].

The problems the storage ponds present are multiple, as they affect large areas of land, their recovery-rehabilitation process is very prolonged in time, they can present stability problems and pose a high risk to persons, animals and, in certain cases, river channels or zones of special environmental importance, meaning that the competent Authorities are extremely demanding when it comes to compliance to specific legislation, guaranteeing this compliance by imposing sureties and the contracting of insurance policies with high premiums.

This invention aims to solve all the aforementioned disadvantages and optimises sludge treatment systems *[ESP0525314; Method for treating sludge from stone cutting".* US6726845*: "Dextran starch and flocculant combination for improving red mud clarification".* JP2004008903*: "Inorganic mud transmutation, flocculation and purification treating agent" IE823086L:Ñ "Flocculating red mud from alumina manufacture"]* as it claims a procedure that aims to be a very useful alternative to the management of ponds and sludge in the mining industry unlike the patents that claim treatment systems for waste waters or pollutants of organic origin, as the purpose of the purification process is different *[*ES 2 166 565 *T3: Treatment of sludge from wastewater or similar sludge.* EP 0 283 153 B1*: "Method of treating wastewater sludge"].*

### DESCRIPTION:

This invention provides a procedure for the treatment of sludge generated by the washing of granular mineral materials, which, compared to the current procedures of the above technique, is more efficient, reduces workers' workload and the space required, and is more controllable.

The procedure claimed in this invention is a new sludge treatment system to obtain the separation of the *liquid-solid* phases without complicated and costly mechanical means such as press filters, *[*ES2089859*: Press filter with means to create a vacuum and vary the temperature in the filtration chamber, to dry the cake (e.g. in the drying of sludge).* ES 2080694*: Method for the purification treatment of wastewater.* ES 2013153*: Process for the extraction of water from sludge from the manufacturing of terrazzo and similar products with press filter and decanting tank.],* band filters *[*ES 2019419*: Procedure to remove water from filter cakes and device for executing this procedure]* or thickeners *[*ES 2027428*: Procedure and facility for the purification of wastewater.* ES 219 541*: Thickener-dehydrator system for muds from wastewater purifiers.*

The treatment procedure to obtain dry sludge claimed in this invention is based on the use of flocculants and simple mechanical means such as stirrers, mixers and measuring devices used to achieve the aggregation of clay particles creating dense floccules (2.8 - 3.0 gr/cm3) deposited by gravity, permitting instant separation of the liquid-solid phases, due to the difference in densities of the liquid phase, 1 gr/cm3 and the solid phase, 2.6 gr/cm³.

The advantages of this procedure are very significant and are mainly related to the environment, low cost of resources (water, electricity, soil, etc) and safety for persons, animals and the natural environment.

One of the main advantages is that on obtaining *"dry sludge",* i.e. flocculated, high-density sludge, water recovery is instantaneous, reaching maximum volumes of up to 80-95% of the water used, which is incorporated into the washing cycle, so that the consumption of this resource is extremely low. From 1000 cm of sludge 800 cm3 of water is recovered and 200 cm3 of clays is obtained with a concentration of 600 gr/l.

This significant recovery of water means that the sludge obtained, or *"dry sludge",* i.e. flocculated, high-density sludge, with a degree of humidity or around 30-35%, can be handled with conventional loading and transport machinery, making storage ponds unnecessary, having no effect whatsoever on the land, eliminating risks to persons, animals and drainage channels, and without requiring the imposition of sureties and insurance policies, with the consequent saving in premiums.

Finally, the *"dry sludge"* can be used in agriculture and soil fertilisation, and depending on its mineral content, i.e. dominant clay type, it can have industrial uses such as the manufacture of porcelain, paper, paints, etc.

The claimed procedure is basically the separation of the liquid-solid phases, obtaining a liquid without solids and a liquid basically composed of solids in concentrated form, i.e. of all sludge generated by the washing of granular mineral materials, such as silica (gravels and sands), coal, carbonates, etc.

The procedure claimed in this invention includes the following stages:
a) Action on the sludge generated by the washing of materials (which we call "primary sludge") with the addition of liquid flocculant, producing decantation in a specific tank called a decanter. In this primary decantation phase the liquid-solid phases are separated, obtaining clean water and sludge with a high humidity content which is currently stored in ponds on the land.
b) Action on this sludge with high humidity content (called "secondary sludge") by means of another mechanical-chemical treatment and the addition of liquid flocculant achieving an aggregation of the clay particles giving rise to high-density floccules that decant very rapidly producing a practically instantaneous phase separation.

These textural and humidity content characteristics allow the *"dry sludge"* to be handled with conventional loading and transport machinery with the consequent elimination of storage ponds and significant water recovery.

### EXAMPLES OF EXECUTION:

The experiments presented below are detailed to support specific aspects of this invention and in no case to limit its scope.
This example illustrates the procedure, as follows:
First, we start from sludge with an initial concentration of 50 gr/l, which is pumped from the mineral washing facility.
Second, an initial flocculating solution is prepared with an approximate concentration of between 0.1 and 0.8 gr/l, which is homogenised by means of bottom and surface stirrers and is added to the initial sludge in a proportion of 30l of mix per m3 of sludge, achieving sludge with a concentration of 300gr/l, which is deposited in a clarifier.

In a third and final step, a flocculating solution is prepared with a concentration of 1-6 gr/l, which is homogenised with bottom and surface stirrers and is added to the sludge concentrated at a proportion of 251 of mix per m3 of sludge, obtaining dry sludge with a concentration of 600 gr/l.
Current liquid-solid phase separation methods tend to be all mechanical using press filters, thickeners or centrifuging, which is complex and costly. The procedure to obtain *"dry sludge"* we present in this invention substantially reduces the cost and the complexity of the machinery of the aforementioned systems.

Sludges generated in the washing of aggregates are basically composed of clays while sludges generated in mineral floatation processes are constituted by fine-ground rock particles. If sludges generated in the aggregate washing process and sludges generated in the mineral floatation process (with previous separation of particles of greater size than the clay of the latter) are suitably treated using polyacrylamide or ethylene polyoxide the clays become aggregated forming dense floccules which are deposited by gravity enabling a rapid separation of the solid-liquid phases.

This sludge-treating process represents a great step forward towards the solving of what is the greatest problem in mining today.

The procedure presented in this invention consists of a sludge treatment process by means of flocculation, which achieves sludge of high density and low humidity content consequently reducing its handling time to 24 hours after generation.

The results obtained after application of the aforementioned procedure are as follows:
- A solid phase (dry sludge) constituted by clay with a very low humidity content, enabling it to be handled easily within a period of 24 hours.
- A liquid phase (water), which due to the speed of the decanting process enables instantaneous recovery of up to 90% of the water used and which is immediately incorporated in the washing cycle or other uses, not over-exploiting aquifers. Consumption is thereby reduced from 100% to 10%.

These results suppose great improvements in the management of ponds and sludge in the mining industry, such as:
- Elimination of storage ponds which means there is no effect on the land (long drying periods are avoided) and that the visual impact is reduced.
- Elimination of risks to persons and animals, pond perimeter fences not being necessary.
- Suitable management of water, a scarce natural resource, as consumption of it is minimal as 90% of that used in the washing process is recovered.
- Its consistency and humidity properties enable the dry sludge to be easily incorporated in rehabilitation works together with vegetal earth in a time space of no more than one day, also obtaining fertilisation of the soil and its incorporation into the agricultural cycle the following year.
- As ponds are not generated the submission of guarantees and insurance policies required by law is not necessary, with the consequent saving on premiums.
- Possible industrial use depending on the composition of the sludge and the quantity generated.
- This innovative and unique sludge treatment process is utterly unlike any of those currently on the market based on mechanical installations which have a high cost and are complex to maintain.

The purpose of this invention is a treatment procedure for sludge generated by the washing of granular mineral materials characterised by the following stages:
a) Addition of flocculating liquid to the primary sludge and decanting in a decanter tank, obtaining the secondary sludge.
b) Addition of liquid flocculant to the secondary sludge.
c) Flocculation of secondary sludge.
d) Decanting and obtaining of tertiary sludge.
e) Separation of tertiary sludge and water.

One important aspect is that the flocculants used in the procedure that is the purpose of this invention are preferably of the polyacrylamide or ethylene polyoxide type.

Another relevant aspect is that the flocculant used in stage a) is added at a concentration of between 0.1 and 0.8 gr/l and preferably a concentration of 0.5 gr/l is added.

Another important aspect is that the flocculant used in stage b) is added at a concentration of between of between 1 and 6 gr/l and is preferably added at a concentration of 3.5 - 4 gr/l.

Another aspect is that the treatment procedure for sludge generated by the washing of granular materials enables elimination of a maximum degree of humidity of primary sludge of between 80% and 95% compared to the total water used in the washing process.

A final important aspect of this invention is the use of the procedure that is the purpose of this invention as a sludge treatment and management optimisation system.

## Claims

1. Treatment procedure for sludge generated by the washing of granular materials **characterised by** the following stages:
a) Addition of flocculating liquid to the primary sludge and decanting in a decanter tank, obtaining secondary sludge.
b) Addition of liquid flocculant to the secondary sludge.
c) Flocculation of secondary sludge.
d) Decanting and obtaining of tertiary sludge.
e) Separation of tertiary sludge and water.

2. Treatment procedure for sludge generated by the washing of granular materials as per claim 1 **characterised by** the fact that the flocculants used are preferably of the polyacrylamide or ethylene polyoxide type.

3. Treatment procedure for sludge generated by the washing of granular materials as per either claim 1 or 2 **characterised by** the fact that the flocculant used in stage a) is added at a concentration of between 0.1 and 0.8 gr/l.

4. Treatment procedure for sludge generated by the washing of granular materials as per claim 3 **characterised by** the fact that the flocculant is preferably added at a concentration of 0.5 gr/l.

5. Treatment procedure for sludge generated by the washing of granular materials as per either claim 1 and 2 **characterised by** the fact that the flocculant used in stage b) is added at a concentration of between 1 and 6 gr/l.

6. Treatment procedure for sludge generated by the washing of granular materials as per claim 5 **characterised by** the fact that the flocculant is preferably added at a concentration of 3.5 - 4 gr/l.

7. Treatment procedure for sludge generated by the washing of granular materials as per either claim 1 to 6 **characterised by** the elimination of a maximum degree of humidity of the sludge of between 80% and 90% compared to the total water used in the washing process.
